# EUROPEAN PATENT APPLICATION

(11) **EP 3 605 401 A1**
(43) Date of publication of application: **05.02.2020**
(21) Application number: 18290090.2
(22) Date of filing: 31.07.2018
(51) Int. Cl.: G06N 3/04, G06N 3/063

(54) **DATA PROCESSING MODULE, DATA PROCESSING SYSTEM AND DATA PROCESSING METHOD**

(71) Applicant: GrAl Matter Labs S.A.S., 75012 Paris (FR)
(72) Inventor: Ahmed, Syed Zahid, 5656 AE Eindhoven (NL); Bortolotti, Daniele, 5656 AE Eindhoven (NL); Reinauld, Julien, 75012 Paris (FR)
(74) Representative: V.O.

(57) **Abstract**

A neuromorphic processing module (1) for time-multiplexed execution of a spiking neural network is provided that comprises a plurality of neural units. Each neural unit is capable of assuming a neural state, and has a respective addressable memory entry in a neuron state memory unit (11) for storing state information specifying its neural state. The state information for each neural unit is computed and updated in a time-multiplexed manner by a processing facility (10, neural controller) in the processing module, depending on event messages destined for said neural unit. When the processing facility computes computing that an updated neural unit assumes a firing state, it resets the updated neural unit to an initial state, accesses a respective entry for the updated neural unit in an output synapse slice memory unit, and retrieves from said respective entry an indication for a respective range of synapse indices, wherein the processing facility for each synapse index in the respective range accesses a respective entry in a synapse memory unit, retrieves from the synapse memory unit synapse property data and transmits a firing event message to each neural unit associated with said synapse property data.

## Description

### BACKGROUND

The advent of cognitive computing has proposed neural computing as an alternative computing paradigm based on the operation of human brain. Due to their inherently parallel architecture neural computing devices are capable to mitigate the Von Neuman memory bottleneck. Inspired on biological principles, neural computing devices are designed as neural units that interact with one another through synaptic connections. Contrary to their analogically operating biological counterparts, IC implementations of these artificial neural computing devices are typically of a digital nature.

This on one hand facilitates their implementation on silicon and on other hand gives the opportunity to exploit the immense technological advances that have been achieved in several decades of digital integrated circuit design. Contrary to currently available digital processing elements, biological neurons work at very low frequencies of few tens to few hundred Hz. Accordingly, this would not impose a large burden on their implementation. However, designing a processing module on silicon having properties compatible to a biological system is still far from practical with state of the art technology, as.a typical biological system typically contains billions of neurons and on average, each of those neurons has a plurality of synapses. One approach is to mimic such a complex system with a time-multiplexed design wherein a plurality of neural units share a processing facility. Since digital hardware can run orders of magnitudes faster than the speed at which biological neurons work the shared processing facility can realistically emulate neuron behavior, while this approach saves space to implement a higher density of virtual neurons and their synapses.

Spiking neural networks are characterized in that the information between neural units is exchanged as a firing event message. Emission of a firing event message (spike) indicates both that data is available, and the time interval that lapsed since the emission of a previous firing event message indicates a data value. The length of the time-interval is indicative for the data value that is to be exchanged. In some designs a firing frequency is indicative for the data value. In other designs a length of a time interval may be indicative for the data value. In both cases a convention may prevail that the absence of an event during a time interval that exceeds a threshold time interval indicates an absence of data. This is of particular importance for array processing, in particular when sparsely filled, for example for processing data from a surveillance camera. Conventional data processing systems would require that each image element is scanned at a predetermined refresh frequency. Therewith the scanning results in a stream of data that is proportional to the number of pixels in the scanned image array and the refresh frequency. In case a spiking neural network is coupled to the image array, only neural units detecting a change in image content will transmit data to secondary neural units. And on their turn, only secondary neural units triggered by the transmitted data will itself transmit data. There with the computational load as well as a load of data transmission channels is substantially reduced.

A neuromorphic data processing system, i.e. a data processing system mimicking a neural network, may comprise a plurality of time-multiplexed processing modules that are grouped together in a 2D-mesh and communicate with each other via a packet switching network on chip (NoC). Each time-multiplexed processing modules may also be considered as a neural computing core. An example of this approach is described by Filipp Akopyan et al, "TrueNorth: Design and Tool Flow of a 65 mW 1 Million Neural unit Programmable Neurosynaptic Chip", IEEE Transactions on Computer-Aided Design of Integrated Circuits and Systems (Volume: 34, Issue: 10, Oct. 2015) | https://ieeexplore.ieee.org/document/7229264/

It is a disadvantageous of this known data processing system that it restricts the mapping ratios of neural units and their synapses. Each neural unit has a fixed number of input synapses and one output synapse. This leads to inefficiencies in case an application neural network requires that a firing (spiking) neural unit has to transmit a firing event message to a larger number of neural units than that fixed number. To achieve this functionality a user will either have to replicate neural units or make relay neural units. In any case it will lead to wasted resources and added power consumption.

### SUMMARY OF THE INVENTION

It is a first object of the invention to provide a neuromorphic data processing module that enables more flexibility in modifying the number of input and output synapses of a neural units without requiring additional neural units.

It is a second object of the invention to provide a neuromorphic data processing system having a plurality of such processing modules.

It is a third object of the invention to provide a corresponding neuromorphic data processing method.

According to a first aspect of the invention, an improved neuromorphic data processing module is claimed. The data processing module operates as a spiking neural network, wherein neural unit states are updated in a time-multiplexed manner. The improved data processing module comprises a combination of independently addressable memory units that determine the network topology. A first of these memory units is an input synapse memory unit which may be indexed with an input synapse identification number and provides for each identified input synapse, input synapse properties including a neural unit identification number having the identified input synapse as an input to receive firing event messages and a weight to be assigned to such messages received at that input. A second of these memory units is an output synapse memory unit which may be indexed with an output synapse identification number and provides for each identified output synapse, output synapse properties including a input synapse identification number which is a destination for a firing event messages and a delay (if any) with which such messages are to be delivered to that destination. A third of these memory units is a output synapse slice memory unit, which may be indexed with a neural unit identification number and specifies for each identified neural unit a range of indexes in the output synapse memory unit. In an embodiment the output synapse memory unit may be integrated with the input synapseinput synapse memory unit as a synapse memory unit. The network topology can be flexibly reconfigured by rewriting these memory units. The fan-out range of neural units can be varied in a virtually unlimited manner, as the output synapse slice of a neural unit is defined with a single entry in the output synapse slice memory unit. The number of output synapses referred to by this entry can be 0, 1, 2 or any other number as long as the total number of all output synapses does not exceed the number of entries in the output synapse memory unit. Therewith tweaks like duplicating neural units or using relay neural units to achieve a high fan-out are obviated. Configuration of the network topology by rewriting the content of these three memory units may take place by the programmer or as part of a machine learning process, during operation.

This feature also helps to exploit reduction in power consumption, since synapses are more expensive part than neural units in such systems. If for a given application there is a slack margin for performance, the mapper can utilize this flexibility to pack more networks into a smaller number of neural engines. This conversely helps to save power by putting unused data processing module in low power modes. The feature can also be exploited in plurality of other scenarios one of them being addition of debug synapses.

As an other aspect of the invention a neuromorphic data processing system is provided that comprises a plurality of neuromorphic data processing modules and a message based network. Therein each neuromorphic data processing module additionally comprising a network communication module, and the neuromorphic data processing modules are coupled with their network communication module to the message based network. The time-multiplexed neuromorphic data processing modules may for example be grouped. together in a 2D-mesh and communicating with each other via a packet switching network on chip (NoC). Alternatively a further integration may be provided in the form of a 3D-mesh.

### BRIEF DESCRIPTION OF THE DRAWINGS

FIG. 1 schematically illustrates a neural unit;
FIG. 2A - 2D schematically show various examples of neural nets composed of neural units;
FIG. 3 schematically shows a neuromorphic processing module;
FIG. 4 schematically shows a neuromorphic processing system;
FIG. 5 schematically shows a functional representation of a neuromorphic processing module;
FIG. 6 shows in more detail a first aspect of FIG. 5;
FIG. 7 shows in more detail a second aspect of FIG. 5;
FIG. 8 shows in more detail a third aspect of FIG. 5;
FIG. 9 shows in more detail a fourth aspect of FIG. 5;
FIG. 10 shows in more detail a fifth aspect of FIG. 5;
FIG. 11 shows an example of a neuromorphic processing method;
FIG. 11A shows sub-steps of this method;
FIG. 12 shows an aspect of this method.

### DETAILED DESCRIPTION OF EMBODIMENTS

The proposed embodiment presents a scalable neuromorphic data processing module that is (re) configurable as a spiking neural network.

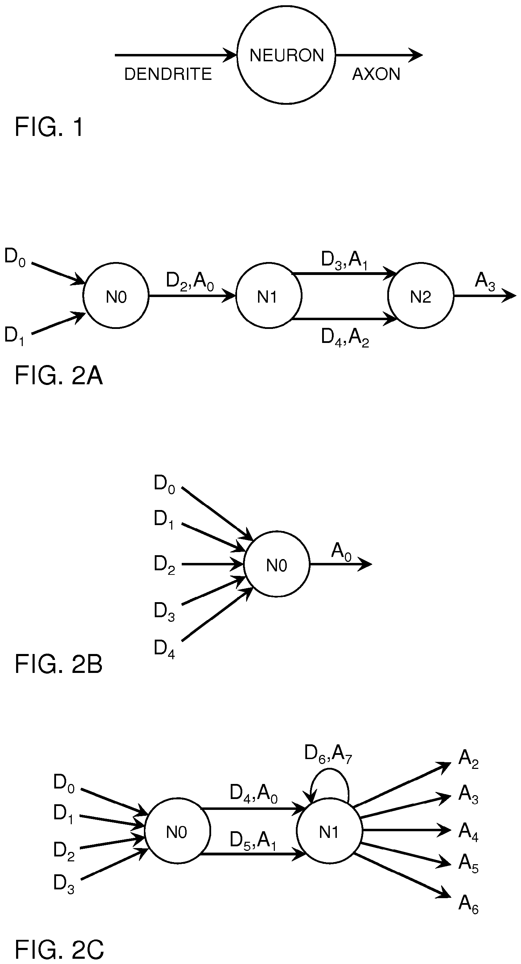

A neural unit as shown in FIG. 1 comprises a neuron, has at least one input synapse, also denoted as dendrite and at least one output synapse, also denoted as axon. A neural unit is capable of assuming a neural state selected from a plurality of states comprising an initial state, one or more transitional states and a firing state wherein it spikes. Its neural state depends on input spikes received with its at least one input synapse and typically the neural state also changes autonomously in time, for example by a transition towards the initial state if it has not received a spike for some time. The at least one input synapse of the neural unit may modify the input spikes with a weight, which may be positive or negative. The at least one output synapse may send a spike with a certain delay.

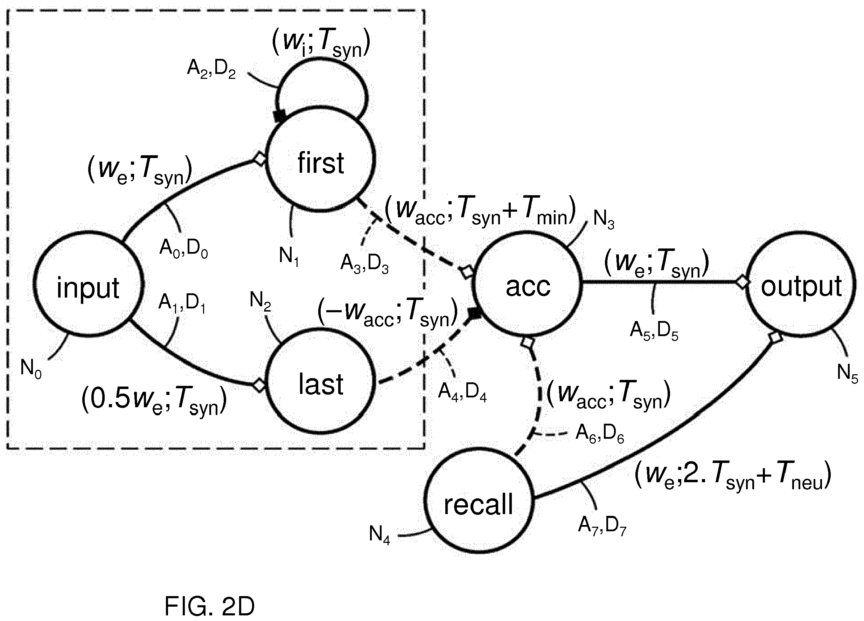

FIG. 2A-2C show exemplary neural networks that may be composed from such neural units. Other examples, such as the unsigned memory network of FIG. 2D presented in WO 2017/009543 may be composed therewith. More in particular FIG. 2A shows a spiking neural network with 3 neural units (N0, N1 and N2) connected with synapses that are classified into input synapses (Di) and output synapses (Ai).
FIG. 2B shows a spiking neural network with one neural unit N0, five input synapses (D0,..., D4) and one output synapse A0.
FIG. 2C shows an example with two neural units N0,N1, seven input synapses (D0,..., D6) and eight output synapses (A0, A1, ..., A7).
Although the principles of neural networks are well known, it is challenging to provide a processing module that can efficiently implement such neural networks. The present application provides a neuromorphic processing module that amongst other can easily be reconfigured.

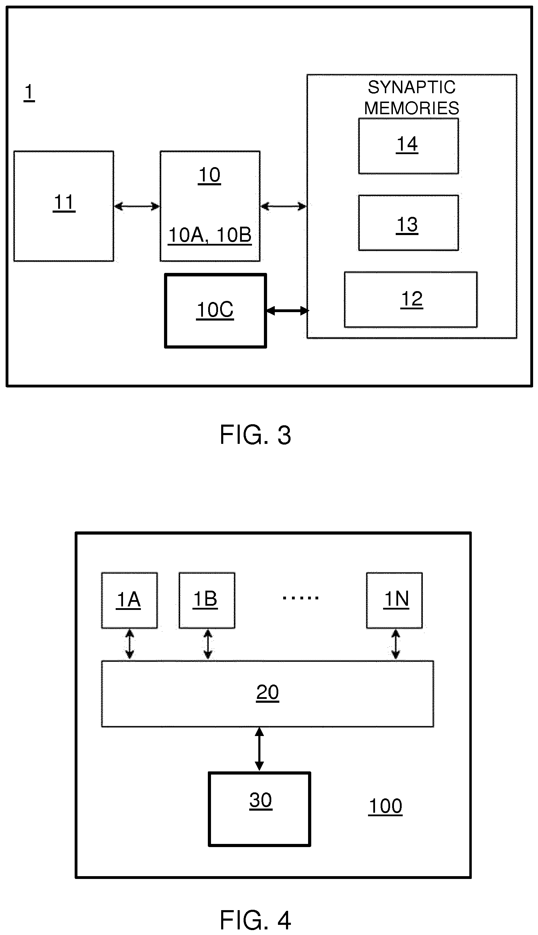

FIG. 3 schematically shows an embodiment of a neuromorphic processing module 1 for time-multiplexed execution of a spiking neural network comprising a plurality of neural units as specified above. In the embodiment shown, each neural unit has a respective addressable memory entry in a neuron state memory unit 11. The neuron state memory unit 11 stores state information specifying its neural state. The state information for each neural unit contained therein is computed and updated in a time-multiplexed manner by a processing facility 10, depending on event messages destined for the neural unit.

In case the processing facility detects that a neural unit assumes the firing state as a result of updating, it resets the updated neural unit to the initial state. It further accesses an entry assigned to the updated neural unit in a output synapse slice memory unit 12, and retrieves from that entry an indication for a range of synapse indices assigned to the updated neural unit. For each of the indices in the range the processing facility accesses a respective entry in a synapse memory unit 13, and it retrieves synapse property data from the accessed entry and transmits a firing event message to each neural unit associated with the synapse property data.

In the embodiment shown in FIG. 3, the synapse memory unit 13 is an output synapse memory unit. The neuromorphic processing module in this embodiment further includes an input synapse memory unit 14. Entries in the output synapse memory unit 13 comprise a input synapse index. The latter points to a corresponding entry in the input synapse memory unit 14. The corresponding entry in the input synapse memory unit 14 comprises a reference to the associated neural unit.

In the embodiment of FIG. 3 entries in the output synapse memory unit 13 further specify a delay with which the firing event is to be transmitted to the associated neural unit.

In addition entries in the input synapse memory unit 14 further specify a weight with which the processing facility weights the firing message when updating the associated neural unit.

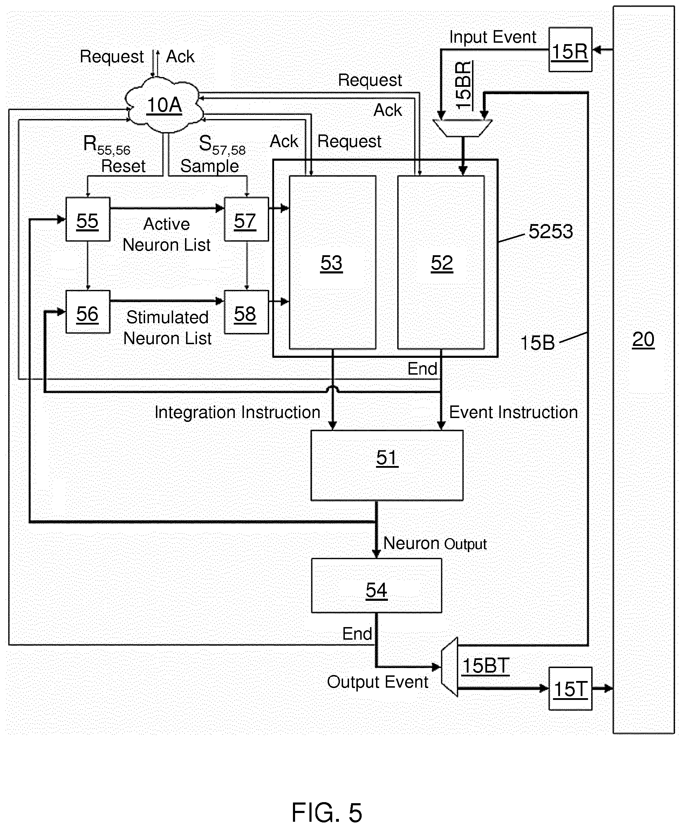

A plurality of neuromorphic processing modules 1A, 1B, ..., 1N may be comprised in a neuromorphic processing system 100 as shown in FIG. 4. The plurality of neuromorphic processing modules is coupled to a message based network 20, tor example network on chip. In the embodiment shown in FIG. 4 in addition a host computer 30 is coupled to the network 20. As shown in FIG. 5, the neuromorphic processing modules 1A, 1B.... 1N additionally comprise a network communication module, with which they are coupled to the message based network 20.

In the example network of FIG. 2A each neural unit has a distinctive feature.
Neural unit N0 has 2 input synapses D0, D1 and one output synapse A0;
Neural unit N1 has 1 input synapse D2 and two output synapses A1 and A2;
Neural unit N2 has 2 input synapses D3, D4 and one output synapse A3;

As pointed out above, in the embodiment of the neuromorphic processing module shown in FIG. 3, separate memory units 13 and 14 are provided for output synapse properties and input synapse properties. In this manner the neural network designer can readily (re)configure the neural network to be created by the neuromorphic processing module. Indeed, this allows independent handling of inputs and output synapses for each neural unit resulting in the flexibility to share or partition the fan-ins and fan-outs of neurons without any constraint.

FIG. 4 schematically shows a neuromorphic data processing system that comprises a plurality of data processing modules 1A, 1B, ... , 1N and a message based network 20. As shown in FIG. 5, each data processing module additionally comprises a network communication module (15R,15T, see FIG. 5), and the data processing modules are coupled with their network communication module to the message based network. The time-multiplexed data processing modules may for example be grouped together in a 2D-mesh and communicate with each other via a packet switching network on chip (NoC). Alternatively a further integration may be provided in the form of a 3D-mesh.

For facilitating the communication via the message based network 20, the synapse memory unit 13 of a neuromorphic processing module specifies for each synapse index in the respective address range in addition a respective network address of the destination neural unit.

In the embodiment shown in FIG. 4, the neuromorphic data processing system further comprises a host computer 30 which is coupled to the network 20. The host computer may have various functions including the function of an interface to provide the network with input data and to extract output data therefrom. In an embodiment the host 30 is configured to update in a processing module 1A, 1B,...,1N the output synapse slice memory unit 12. Alternatively or additionally the host may be configured to update the synapse memory unit 13. In case the synapse memory unit 13 is provided as an output synapse memory unit, which is the case for example in the embodiment of FIG. 3, the host may be configured to update the separate input synapse memory unit 14. Alternatively, processing modules may include a (re)configuration facility 10A (See FIG. 3) that enable them to autonomously reconfigure, for example as part of a machine learning process. In still other embodiments one or more of the memory units 12, 13, 14 or a portion thereof may have a predetermined content. Some of the neuromorphic processing modules may have their memory units 12, 13 and 14 implemented in ROM, for example to implement secure functions, to avoid tampering therewith.

In an embodiment the host computer 30 may be available for debugging operations in that it can configure the neural units to directly transmit debug messages to the host computer by specifying the host network address as an entry in its associated output address range in the output synapse memory unit.

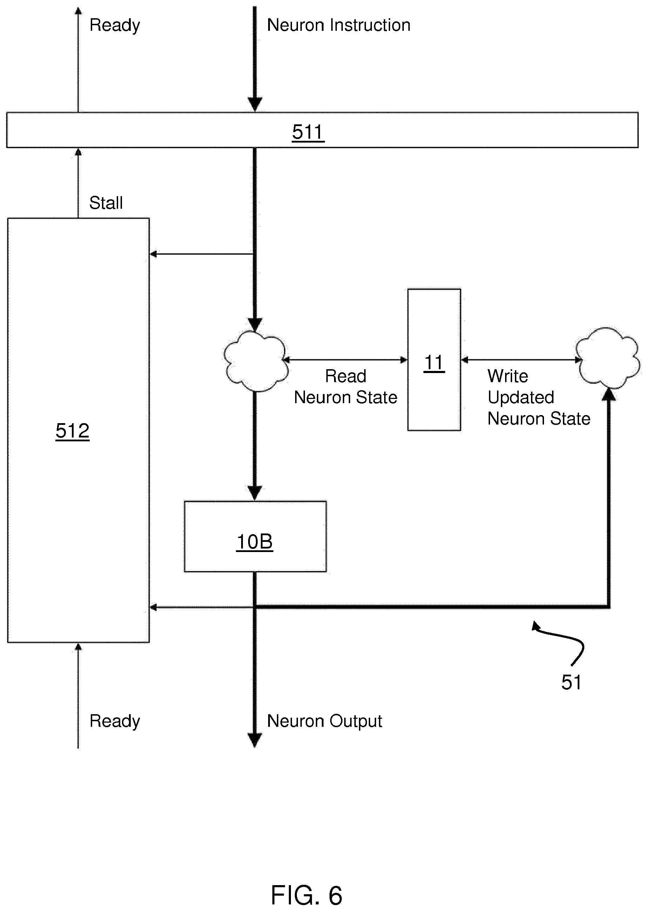

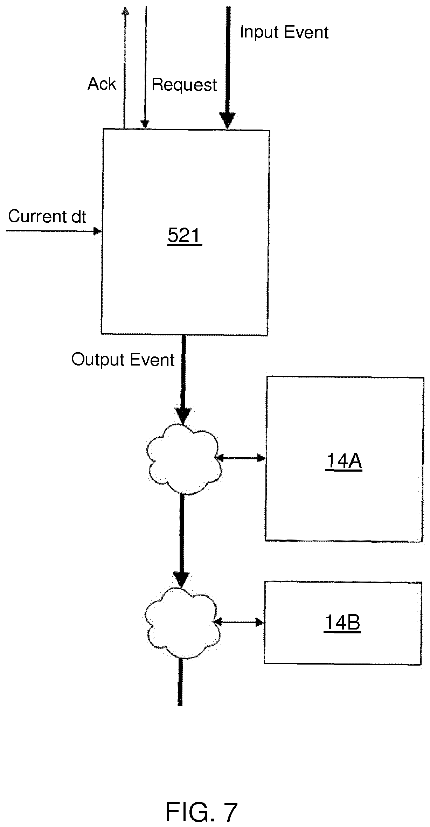

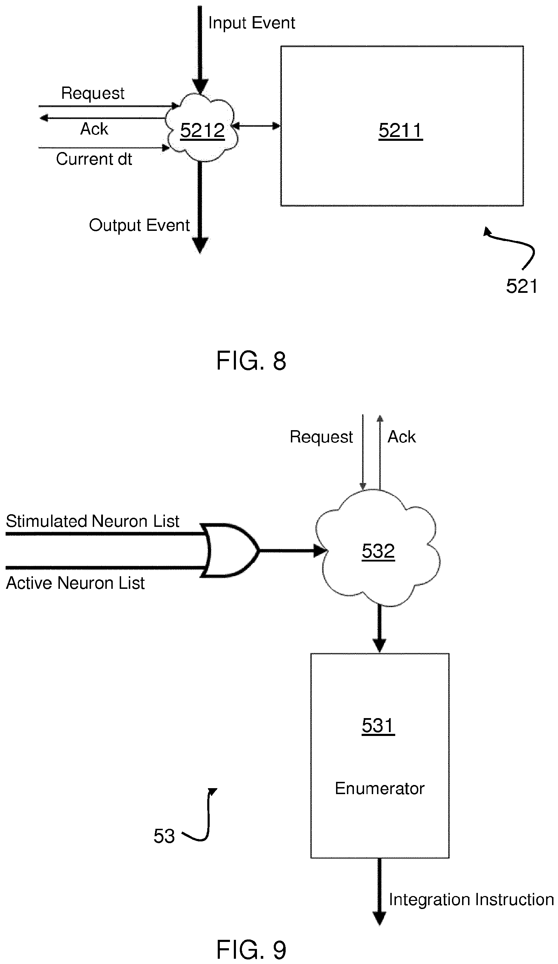

FIG. 5 shows in more detail functional aspects of a neuromorphic processing module. These comprise:
The neuron pool 51, as further shown in FIG. 6, represents the neuron state memory unit 11 that contains the present state of all neural units and the computation facility 10B that in a time-multiplexed manner updates these states. An event controller 52 is provided to receive event messages for its processing module from the receiving interface 15R. In the embodiment shown it may also receive locally generated messages via a bypass 15BT,15B, 15BR. The event controller is specified in more detail with reference to FIGs. 7 and 8. An integration controller 53, as shown in more detail in FIG. 9 is to provide integration instructions. The event controller 52 and the integration controller 53 together form a neural controller 5253 that provides the neuron instruction to the neuron pool.

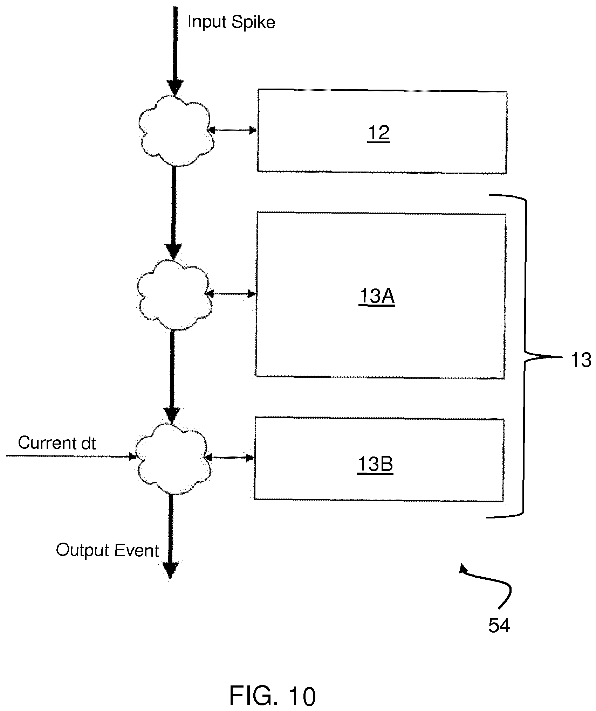

The event generator 54, described in more detail with reference to FIG. 10 is to generate the firing event messages in response to an output from the neural pool 51 indicating such event.

The processing module of FIG. 5 further includes a selection information memory unit 55, 56 that contains selection information to facilitate the control facility 10A, to determine whether or not an update of a state of a neural unit is required. The selection information in unit 56 indicates whether a firing event message was transmitted to a neural unit. The state of the recipient neural unit, being the target of the transmitted message, needs to be updated in this case. The selection information in unit 55 further indicates whether it was previously determined that a neural unit is in an active state. Also in that case the state of the neural unit needs to be updated. A neural unit is considered active if it is not in the reset state. The control facility 10A can reset the list of active neural units and recipient neural units with control signal R55,56 and can issue a control signal S₃₇. ₃₈ to sample an entry on the list as input to the integration controller 53. The event controller 52 adds neural unit ID to the list of recipient neural units in memory unit 56 if it has received an event message with this neural unit as a destination. The neural memory pool 51 adds a neural unit ID to the list of active neural units in memory unit 55 if after a update state the state is determined as active. In case, as a result of the state update a spike occurs, the neural unit is reset to its initial state, and removed from the list 55 of active neural units.

FIG. 6 shows in more detail functional aspects of the neuron pool 51 As mentioned above, the neuron pool 51 represents the neuron state memory unit 11 that contains the present state of all neural units and the computation facility 10B that in a time-multiplexed manner updates these states. An input register 511 forms an interface with the neural controller 5253 comprising the event controller 52 and the integration controller 53 from which it receives the instructions. Internally, its operation is controlled by pipeline controller 522, which can issue a Stall signal and therewith negate the Ready signal, so as to temporally block the neural controller 5253.

As shown in more detail in FIG. 7, the event controller 52 upon receipt of an event message (Input Event) enters the event message in an event list 521, which is maintained in a sorted order in an Event Memory 5211, see FIG. 8 or at least arranged in a manner wherein the message (Output Event) that is first to be processed by a neural unit is rapidly available, such as in a heap data structure. The event controller accesses the input synapse memory unit 14 having component 14A to identify the neural unit within the pool that is addressed and a component 14B to determine the weight with which the event is to be weighted in updating that identified neural unit. The output message (Output Event) is issued as an event instruction to the neural pool 51 when the current time (Current dt) is the same as the specified time of execution, corresponding with the delay imposed by the output synapse of the transmitting neural unit. Having identified the recipient neural unit the event controller 52 updates the list 56 accordingly.

The integration controller 53 shown in more detail in FIG. 9 provides the neural pool with integration instructions. The state of neural unit, upon receipt of an integration instruction, is updated. The instructions are issued by an enumerator 531, which is controlled by control logic 532. An integration instruction will always be provided if the neural unit needs to be updated if it is the recipient of an event message, but also if it is in an active state, even if it did not receive an event message.

The event generator 54, shown in more detail in FIG. 10 will upon a filing event (Input Spike) use the output synapse slice memory unit 12 and the output synapse memory unit 13 to generate event messages (Output Event) with the specified synaptic delay as specified in memory component 13A and addressed at the input synapse ID at the destination NE, specified in the memory component 13B.

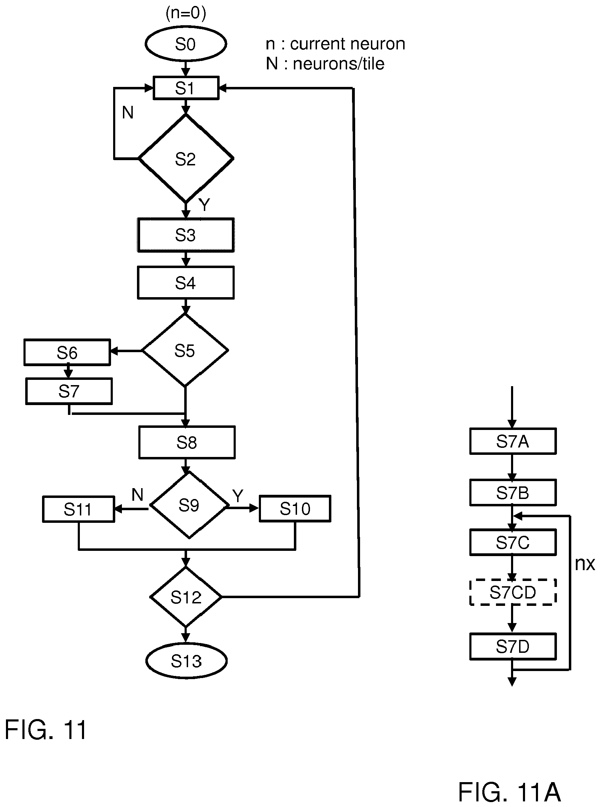

FIG. 11 schematically shows a neuromorphic data processing method according to the present invention for time-multiplexed execution of a spiking neural network comprising a plurality of neural units.

In this method a sequence of steps is repeated, wherein each repetition is associated with a respective neural unit.

In step S2 it is verified by the integration controller whether an update enablement condition is complied with for the respective neural unit. If this is the case the following subsequence of steps S3-S11 is performed subject to further conditions specified below. If this is not the case, this condition is verified for a subsequent neural unit.

Upon compliance neural state information is retrieved (S3) for the respective neural unit from a respective addressable memory entry in the neuron state memory unit 11 and the processing facility 10B updates (S4) the state information depending on event messages destined for said neural unit. The update may also be necessary to emulate an autonomous decay process in the neural unit. It may be a result of the emulated decay process that the neural unit falls back to its initial state and therewith is classified as inactive.

The processing facility 10B determines (S5) whether the updated state information indicates a firing state. If this is the case it resets (S6) the state information so as to indicate the initial state and further distributes (S7) a firing event message. Distribution may involve the following steps.

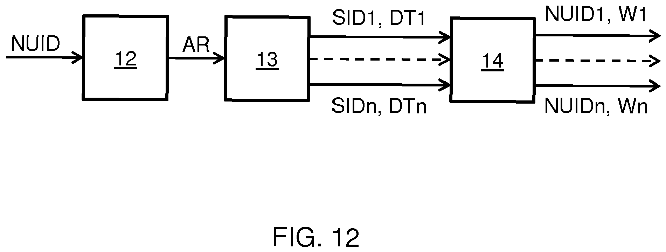

As also illustrated in FIG. 11A and FIG. 12, the processing facility accesses (S7A) a proper memory entry for the updated neural unit (having identification NUID) in the output synapse slice memory unit 12 and retrieves (S7B) from that memory entry an indication of a respective range AR of synapse indices. Then for each synapse index (SID1,...,SIDn) in that range it accesses (S7C) a respective entry in a synapse memory unit 13 and retrieves synapse property data. This data includes an identification of the neural units to be addressed (NUID1,...,NUIDn). It subsequently transmits (S7D) the firing event message to each neural unit associated with destination information contained in the retrieved synapse property data. The synapse property data typically further includes delay information (DT1,...,DTn) and weight information (W1,...,Wn).

Optionally, as is the case here, the destination information includes a specification for a respective addressable memory entry in a input, synapse memory unit 14 (SID1,...,SIDn). The latter specifies the associated neural unit addressed (NUID1,...,NUIDn) and a weight (W1,...,Wn) with which the processing facility weights the firing message when updating the associated neural unit. In that case the method comprises an intermediate step (S7CD) subsequent to the step of deriving (S7C) and preceding the step of transmitting (S7B). In this intermediate step the specification is retrieved from the destination information, and a respective addressable memory entry in the input synapse memory unit (14) specified by the specification is accessed. The identification of the associated neural unit is then retrieved from the accessed respective memory entry.

### Example I:

By way of example an implementation of the network of FIG. 2A is described in more detail below. It is presumed that the memory units 12, 13, 14 are loaded before with the configuration information that defines the network topology.

### Input synapse memory unit (14)

This memory unit 14 specifies destination information. Each entry can be considered as specifying a specific incoming synapse (input synapse) of a particular neural unit in the data processing module. This includes synapses coming from another neural in the same data processing module but may also include synapses coming from a neural unit in another data processing module arranged in a message exchange network. In an embodiment each entry of the input synapse memory unit may comprise a first field with information specifying a weight of the synapse and a second, field comprising an identifier for the neural unit being the owner of the synapse.

The contents of this memory unit and the way aspects of the network topology are mapped in this memory unit is presented in the table below. The entries in this memory unit may for example have embodiment in table below for illustration shows three fields:
The input synapse IDs are represented by the address index of the memory unit itself (no memory bits are used for this information). Each addressable entry in this memory unit corresponds to a specific synapse. The depth of the memory unit is al.
In the example shown the field neural unit ID comprises the identifier for the neural unit. The size b1, required for this field is 2log of the number of neural units (e.g. for a data processing module with 256 neural units this field will be 8 bits).
The second field contains a value representative for a synaptic weight assigned to the synapse. Dependent on the desired granularity with which the synaptic weight is to be specified the number b2 of bits for this field b2 may be smaller or larger. In an example the number of bits for this field is 32 bits.

### Mapping Example

The table below shows the filled contents of this memory unit 14 for the example network shown in figure 3. The exemplary network has three neural units
(N0,..., N2) and five Input synapses (D0,..., D4) having synaptic weights (W0,..., W4) respectively. Following the contents of the memory unit with
regards to the network shown in the figure is straight forward. We can see that D0, D1 with Synaptic weights W0, W1 are going to N0. D2 to
N1 and so on. It also illustrates how the synaptic connectivity for neural units with multiple input synapses (N0 and N2 in this case) are managed in the input synapse memory unit.

**Table 1: Example input synapse memory unit**

| Input synapse ID | Neural unit ID | Synaptic Weight |
|---|---|---|
| D0 | N0 | W0 |
| D1 | N0 | W1 |
| D2 | N1 | W2 |
| D3 | N2 | W3 |
| D4 | N2 | W4 |

In an embodiment, the input synapse memory unit may further specify how an input is internally processed, for example by adding the weight to an action potential value, or by using the weight as a linear component with which the action potential value is increased in each time step. Also the weight may be used to set or modify a decay value representing a gradual deactivation of a neural unit in the absence of further input events.

### Output synapse memory unit 13

This memory unit 13 defines destination information each entry specifying a destination for a firing event message which originates from a neural unit. Each entry may be considered an outgoing synapse (axons) of a neural units in the data processing module. This includes synapses going to another neural unit in the same data processing module as well as synapses to another data processing module or plurality of other heterogeneous components of a data processing system. The information in each entry of memory unit 13 may comprise a first field with a value indicative for synaptic delay of the synapse, i.e. a delay which with the firing event message is delivered. This field may have a smaller or a larger number of bits b3, depending on a desired granularity with which a synaptic delay is to be specified. In an example the number b3 is 32.

A second field (destination input synapse ID) may comprise an identifier for the input synapse that is to receive the firing event message. The second field may have a number of b5 bits depending on number of input synapses. For example if the data processing module has 256 Input synapses the value will be 8 bits.
In case the data processing module is one of a plurality of data processing modules that are mutually coupled by a message exchanging network, a third field (NE ID) may be provided to provide an identifier for a destination module as in the exemplary table below. The firing event message is then transmitted to the destination data processing module as specified in the third field and upon receipt by the destination data processing module routed to the input synapse specified in the second field. The size of this field is b4-bits depending on the number of data processing modules in the network. For example, in a network with 65k data processing modules the number of bits should be (at least) 16,

As each entry in the memory unit 13 corresponds to a particular destination for a firing event message issued by a neuron it is not necessary to include a field with a specification for the output synapse. In other words, the output synapse IDs are represented by the address index of the memory unit 13 itself (no memory bits are used for this information). A smaller or larger memory depth maybe selected depending on desired upper limit for the total number of all output synapses of all neural units in a data processing module.

### Manning Example

The table below shows the filled contents of this memory unit 13 for the example network shown in FIG. 2A. The neural network has three neural units (N0,..., N2) and four output synapses (A0, ..., A3) having synaptic delays (T00,..., T3) respectively. Following the contents of the memory with regards to the network shown in the figure is straight forward. We can see that for this specific example all output synapses are within the same data processing module (identified in the table as NEx) except the output synapse that is represented by the entry with memory address A3, which is going to another data processing module (represented as data processing module NEy in the table). The last column of the memory shows the input synapse ID of the input synapse connected to this output synapse for operation of received firing event messages (also referred as input spike) with respect to the neural units. The specified input synapse IDs is the address of the entry in the input synapse memory unit that contains the input synapse information for this input synapse. To illustrate further, we can see from the table that output synapse A0 which has a synaptic delay T0, is for transmission of firing event messages to data processing module NEx (same data processing module) and is connected to input synapse with ID D2 as shown in the network diagram.

Upon receipt of a firing event message via input synapse D2, the control facility 10A will retrieve the identifier for the associated neural unit from the input synapse memory unit 14, which is neural unit N1 in this case and will instruct the computation facility 10B to update the state of this neural unit N1, taking further into account the synaptic weight W2 which is assigned to this input synapse D2. In this example, output synapse A3 with synaptic delay T3 is a synapse is directed to an external data processing module NEy within that external destination data processing module NEy it is connected to the input synapse ID Dx.

**Table 2: Example output synapse memory unit**

| output synapse ID | Synaptic Delay | Destination data processing module ID | Destination input synapse ID |
|---|---|---|---|
| A0 | T0 | NEx | D2 |
| A1 | T1 | NEx | D3 |
| A2 | T2 | NEx | D4 |
| A3 | T3 | NEy | Dx |

### Output output synapse slice memory unit 12

The output output synapse slice memory unit 12 specifies which output synapses in the output synapse memory unit 13 correspond to each neural unit in the data processing module. When a neural unit issues a firing event message this memory unit 12, the control facility 10A retrieves an indication for an address range from the output synapse slice memory unit 12. The indication is retrieved from the entry in the output synapse slice memory unit 12 having the address corresponding to the firing neural unit. In the present embodiment the range of addresses is specified in a first and a second field of said entry. The first field specifies an offset into the output synapse memory unit 13 (the first address in the range) and the second specifies a number of entries. The size of the field specifying the offset is b6-bits (b6 can have plurality of values, its value in general is log2 of the number of output synapses in the data processing module. Alternatively it would be possible to specify a first and a last address of the range or a last address of the range and a number of entries. The size of the second field specifying the number is b7-bits (b7 can have plurality of values), its value in general is log2 of the average number of output synapses for a neural unit.

### Mapping

By way of example Table 3 below shows the mapping of the neural network of FIG. 2A. The neural network in this example has three neural units N0, N1, N2, each having a respective entry in the memory unit 12. As specified in memory unit 12 neural unit N0 has one output synapse A0 and its output synapse properties are specified in the entry having offset 0 in the output synapse memory unit 13, N1 has two output synapses A1, A2 and the first of the two entries has offset address 1 in the output synapse memory unit. Finally neural unit N2 has one output synapse A3 and its output synapse properties are specified in the entry at offset address 3 in the output synapse memory unit. When a neural unit issues a firing event message, the control facility 10A retrieves the specifier for the output synapses to transmit the event from memory unit 12 and uses the output synapse properties which are specified in the memory unit 13 for each specified output synapse.

**Table 3: Example output synapse slice memory unit**

| Neural unit ID | Offset | Output synapse count |
|---|---|---|
| N0 | 0 | 1 |
| N1 | 1 | 2 |
| N2 | 3 | 1 |

### Neuron state memory unit 11

The neuron state memory unit 11 stores a respective state values (membrane potentials) for each neural unit during the execution. The neural unit identification number (Neural Unit ID) may be used as the index to address this memory unit, so that it does not require a separate field. This memory unit 11 has a depth of a4 corresponding to the number of neural units in the data processing module. The state values have size of b8 bits (b8 can have plurality of values depending on a granularity with which the plurality of neural state variables are to be stored). One example of b8 is 50 bits.

In one embodiment the neural state may be defined by an action potential V, which is indicative for its state of excitement. The action potential may have a value in a range from a minimum value to a maximum value, wherein the maximum value is typically defined by a threshold value at which the neural unit emits a spike, and is reset to an initial state, wherein the action potential assumes the minimum value, for example the value 0. It may be conceived to allow also negative action potential value to occur, for example as a result of inhibiting inputs.

Typically an action potential V of a neural unit, like a biological neural unit decays in time. The action potential may be considered as a superposition of a constant component and a decaying component (gf), for each of which the current value is stored as the state. In an embodiment the decay may be linear, in another embodiment the decay may be exponential.

A value represented by exchange of spikes may be represented in various ways. In an embodiment, the value may be represented by the frequency of the spikes, a higher frequency presents a higher value. In that case an addition of inputs can take place by counting the number of received spikes. At each received spike the action potential is increased with a weight assigned to the input at which it is received. Alternatively, a value may be represented by a time interval between subsequent spikes. The neural unit may have a linear increasing component that is added to the action potential. The linear increasing component may be provided as an increment value (ge) that is added in each discrete time step to the action potential. A neural unit may set the increment value to a weight value upon receipt of a first spike at a first synapse and may reset the increment value to 0 upon receipt of a second spike at a second synapse. The resulting change of value of the action potential is then the weight time the number of discrete time steps between receipt of the first spike and receipt of the second spike. The increment value may be stored as a further state value.

As a further state value, a separate control value (gate) may be stored, that determines to which extent another state value (for example a decay) contributes to the action potential.

**Table 4: Example neuron state memory unit**

| Neural unit ID | State values (b8-bits) |
|---|---|
| N0 | V, ge, gf, gate |
| N1 | V, ge, gf, gate |
| N2 | V, ge, gf, gate |

### Examples of Adaptive mapping of Neural units and Synapses

### Example-1

FIG. 2B shows an example data processing module with one neural unit N0, five input synapse synapses (D0,..., D4) and one output synapse A0. The tables below show the mapping of this example network onto the synaptic memories in the manner explained in detail in sections above. Unused locations are indicated with the symbol X.

**Table 5: Input synapse memory unit 14**

| Input Synapse ID (Depth=10) | Neural unit ID | Synaptic Weight |
|---|---|---|
| D0 | N0 | W0 |
| D1 | N0 | W1 |
| D2 | N0 | W2 |
| D3 | N0 | W3 |
| D4 | N0 | W4 |
| X | X | X |
| X | X | X |
| X | X | X |

**Table 6: Output synapse memory unit 13**

| Output synapse ID (depth = 10) | Synaptic Delay | Destination ID | Input synapse ID |
|---|---|---|---|
| A0 | T0 | NEy | Dy |
| X | X | X | X |
| X | X | X | X |

**Table 7: Output synapse slice memory unit**

| Neural unit ID | Offset | Output synapse count |
|---|---|---|
| N0 | 0 | 1 |
| X | X | X |
| X | X | X |

### Example-2

FIG. 2C shows an example with two neural units N0,N1, seven input synapses (D0,..., D6) and eight output synapses (A0, A1, ..., A7). The tables below show the mapping of this example network onto the synaptic memories in the manner explained in detail in sections above.

**Table 8: Input synapse memory unit**

| Input Synapse ID | Neural unit ID | Synaptic Weight |
|---|---|---|
| D0 | N0 | W0 |
| D1 | N0 | W1 |
| D2 | N0 | W2 |
| D3 | N0 | W3 |
| D4 | N1 | W4 |
| D5 | N1 | W5 |
| D6 | N1 | W6 |
| X | X | X |
| X | X | X |
| X | X | X |

**Table 9 :Output synapse memory unit**

| Output synapse ID | Synaptic Delay | Destination ID | Input synapse ID |
|---|---|---|---|
| A0 | T0 | NEx | D4 |
| A1 | T1 | NEx | D5 |
| A2 | T2 | NEy | Dya |
| A3 | T3 | NEy | Dyb |
| A4 | T4 | NEy | Dyc |
| A5 | T5 | NEy | Dyd |
| A6 | T6 | NEy | Dye |
| A7 | T7 | NEx | D6 |
| X | X | X | X |
| X | X | X | X |

**Table 10: output synapse slice memory unit**

| Neural unit ID | Offset | Output synapse count |
|---|---|---|
| N0 | 0 | 2 |
| N1 | 2 | 6 |
| X | X | X |

### Example 3:

As a further example contents for memories 12, 13 and 14 are described for an unsigned memory, as shown in FIG. 2D

**Table 11: Example input synapse memory unit**

| input synapse ID | Neural unit ID | Synaptic Weight |
|---|---|---|
| D0 | N1 | we |
| D1 | N2 | 0,5we |
| D2 | N1 | wi |
| D3 | N3 | wacc |
| D4 | N3 | -wacc |
| D5 | N5 | we |
| D6 | N3 | wacc |
| D7 | N5 | we |

**Table 12: Example output synapse memory unit**

| Output synapse ID | Synaptic Delay | Destination ID | Input synapse ID |
|---|---|---|---|
| A0 | Tsyn | NEx | D0 |
| A1 | Tsyn | NEx | D1 |
| A2 | Tsyn | NEx | D2 |
| A3 | Tsyn+Tmin | NEx | D3 |
| A4 | Tsyn | NEx | D4 |
| A5 | Tsyn | NEx | D5 |
| A6 | Tsyn | NEx | D6 |
| A7 | 2*Tsyn+Tneu | NEx | D7 |
| - | - | - | - |
| - | - | - | - |

**Table 13: Output synapse slice memory unit**

| Neural unit ID | Offset | Output synapse count |
|---|---|---|
| N0 | 0 | 2 |
| N1 | 2 | 2 |
| N2 | 4 | 1 |
| N3 | 5 | 1 |
| N4 | 6 | 2 |
| N5 | - | - |
| | | |

It is noted that various control functions may be performed by dedicated controllers. Alternatively a controller may perform various control functions. For example in a time shared manner. A controller for performing one or more control functions may be implemented in dedicated hardware, in a programmable or configurable device or a combination thereof. The computation facility 10B that updates neural unit states may likewise be implemented in various manners, but is preferably provided as dedicated hardware for optimal performance.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

## Claims

1. A neuromorphic processing module (1) for time-multiplexed execution of a spiking neural network comprising a plurality of neural units, each neural unit being capable of assuming a neural state selected from a plurality of states comprising an initial state, one or more transitional states and a firing state, each neural unit having a respective addressable memory entry in a neuron state memory unit (11) for storing state information specifying its neural state, the state information for each neural unit being computed and updated in a time-multiplexed manner by a processing facility (10) incorporated in said processing module, depending on event messages destined for said neural unit, wherein the processing facility upon computing that an updated neural unit assumes the firing state, resets the updated neural unit to the initial state, accesses a respective entry for the updated neural unit in a output synapse slice memory unit, and retrieves from said respective entry an indication for a respective range of synapse indices, wherein the processing facility for each synapse index in the respective range accesses a respective entry in a synapse memory unit, retrieves from the synapse memory unit synapse property data and transmits a firing event message to each neural unit associated with said synapse property data.

2. The neuromorphic processing module according to claim 1, wherein the synapse memory unit is an output synapse memory unit, and wherein the neuromorphic processing module further includes an input synapse memory unit, respective entries in the output synapse memory unit comprising a respective input synapse index corresponding to a respective entry in the input synapse memory unit, the respective entry in the input synapse memory unit comprising a reference to the associated neural unit.

3. The neuromorphic processing module according to claim 2, wherein an entry in the output synapse memory unit (13) further specifies a delay with which the firing event is to be transmitted to the associated neural unit, and/or wherein an entry in the input synapse memory unit further specifies a weight with which the processing facility weights the firing message when updating the associated neural unit.

4. The neuromorphic processing module according to claim 1, wherein the synapse property data comprised in the synapse memory unit comprises an indication of the associated neural unit, and specifies one or more of a delay with which the firing event is to be transmitted to the associated neural unit and a weight with which the processing facility weights the firing message when updating the associated neural unit.

5. The neuromorphic processing module according to one of the previous claims, wherein the processing facility (10) comprises a control facility (10A), and a computation facility (10B), wherein the control facility (10A) is configured to periodically verify and signal whether or not an update of a state of a neural unit is required, and wherein the computation facility (10B) is configured to compute an updated state of a neural unit if this is signaled by the control facility (10A).

6. The neuromorphic processing module according to claim 5, further including a selection information memory unit comprising selection information to facilitate the control facility (10A), to determine whether or not an update of a state of a neural unit is required, wherein the selection information indicates whether a firing event message was transmitted to a neural unit, and/or indicates whether it was previously determined that a neural unit is in an active state..

7. The neuromorphic processing module according to one of the previous claims, wherein the processing facility (10) further comprises a reconfiguration facility (10c), which is configured to update at least one of the output synapse slice memory unit, the synapse memory unit if present, the output synapse memory unit if present and the input synapse memory unit if present.

8. A neuromorphic processing system comprising a plurality of neuromorphic processing modules as claimed in one of the previous claims, and a message based network, each neuromorphic processing module additionally comprising a network communication module, wherein said neuromorphic processing modules are coupled with their network communication module to the message based network.

9. The neuromorphic processing system according to claim 8, wherein the message based network with the plurality of neuromorphic processing modules is formed as a network on chip.

10. The neuromorphic processing system according to claim 8 or 9, wherein the synapse memory unit (13) of a neuromorphic processing module specifies for each synapse index in the respective address range in addition a respective network address of the destination neural unit.

11. The neuromorphic processing system according to one of the claims 8 to 10, further comprising a host computer configured to update in a processing module at least one of the output synapse slice memory unit, the synapse memory unit if present, the output synapse memory unit if present and the input synapse memory unit if present.

12. A neuromorphic processing method for time-multiplexed execution of a spiking neural network comprising a plurality of neural units, each neural unit being capable of assuming a neural state selected from a plurality of states comprising an initial state, one or more transitional states and a firing state, the method comprising repeating the following sequence of steps S3-S11 subject to conditions specified below:
retrieving (S3) neural state information for a neural unit from a respective addressable memory entry in a neuron state memory unit;
updating (S4) said state information depending on event messages destined for said neural unit,
determining (S5) whether the updated state information indicates a firing state,
subject to determining said correspondence resetting (S6) the state information so as to indicate the initial state and distributing (S7) a firing event message comprising the following sub-sub-steps:
accessing (S7A) a proper memory entry for said updated neural unit in a output synapse slice memory unit (12);
retrieving (S7B) from said proper memory entry an indication of a respective range of synapse indices;
for each synapse index in said respective range:
accessing (S7C) a respective entry in a synapse memory unit and retrieving synapse property data
transmitting (S7D) the firing event message to each neural unit associated with destination information contained in the
retrieved synapse property data;
storing (S8) the updated state information for the respective neural unit in its respective addressable first memory entry in the first memory unit.

13. The neuromorphic processing method according to claim 12, comprising selecting neural units to be updated with the specified sequence of steps S3 to S11 by verifying (S2) whether an update enablement condition is complied:

14. The neuromorphic processing method according to claim 12 or 13, wherein the destination information includes a specification for a respective addressable memory entry in a input synapse memory unit (14), wherein the respective addressable memory entry specifies the associated neural unit and a weight with which the processing facility weights the firing message when updating the associated neural unit, the method comprising an intermediate step (S7CD) subsequent to the step of deriving (S7C) and preceding the step of transmitting (S7B), which intermediate step involves retrieving the specification from the destination information, accessing a respective addressable memory entry in the input synapse memory unit (14) that is specified by the specification and retrieving an identification of the associated neural unit from the accessed respective memory entry.

15. The neuromorphic processing method according to claim 12, 13 or 14, comprising reconfiguring a neural network topology by updating at least one of the output synapse slice memory unit, the synapse memory unit, the output synapse memory unit and the input synapse memory unit.
